# EUROPEAN PATENT SPECIFICATION

(11) **EP 3 765 882 B1**
(45) Date of publication and mention of the grant of the patent: **22.11.2023**
(21) Application number: 18729212.3
(22) Date of filing: 16.03.2018
(51) Int. Cl.: G02B 6/44

(54) **OPTICAL BOX AND METHOD FOR INSTALLING AN OPTICAL ACCESS NETWORK**
OPTISCHER KASTEN UND VERFAHREN ZUR INSTALLATION EINES OPTISCHEN ZUGANGSNETZES
BOÎTIER OPTIQUE ET PROCÉDÉ D'INSTALLATION D'UN RÉSEAU D'ACCÈS OPTIQUE

(43) Date of publication of application: 20.01.2021
(73) Proprietor: Prysmian S.p.A., 20126 Milan (IT)
(72) Inventor: ABBIATI, Fabio, 20126 Milan (IT)
(74) Representative: Pietra, Giulia
(86) International application number: PCT/IT2018/000036
(87) International publication number: WO 2019/175908

(56) References cited:
- WO-A1-2017/129815
- US-A1- 2011 293 234
- US-A1- 2012 295 486

## Description

### Technical field

The present invention relates to the field of optical access networks. In particular, the present invention relates to an optical box for an optical access network and to a method for installing an optical access network.

### Background art

An FTTH (Fiber To The Home) network is an optical access network providing a number of end users with communication services, e.g. with services requiring data transmission at a rate of some hundreds of Mbit/s or more.

Typically, an FTTH network comprises a distribution cabinet cooperating with a transport network and a number of optical cables (namely, cables comprising optical fibers) which connect the distribution cabinet with termination boxes arranged at the various user's premises. In particular, an optical cable comprising multiple optical fibers typically exits the distribution cabinet and runs through an area (e.g. a residential area) where the houses of different end users are placed. Such optical cable will be termed herein after "distribution cable" and the optical fibers comprised therein will be termed "distribution fibers".

The distribution cable may be either laid down in underground ducts running besides the houses or, alternatively, it may be horizontally fixed to the houses' façades. In the latter case, the deployment of the FTTH network requires using cables and other components which exhibit high resistance to stresses typical of outdoor environments and which are effectively sealed against seepage and dust infiltrations.

In order to connect an end user (namely, her/his termination box) to the distribution cable, a first window is typically cut in the external sheath of the distribution cable at a first mid-span position thereof and then one or more distribution fibers are cut through this first window. Then, a second window (also termed "tapping window") is cut in the external sheath of the distribution cable at a second mid-span position thereof, intermediate between the distribution cable end connected to the distribution cabinet and the first window, possibly on the façade of the house where the end user resides. The cut distribution fiber(s) is/are then drawn through the tapping window.

The cut distribution fiber(s) may then be connected to an end of a so-called "drop cable" extending from the tapping window to the end user's termination box. A drop cable may comprise one or more optical fibers (up to 4, typically), which are termed herein after "drop fibers". Each drop fiber may be connected to a respective distribution fiber e.g. by means of a mechanical splice or fusion splice.

Alternatively, if a sufficient length of the distribution fiber(s) may be cut, the cut distribution fiber(s) extracted from the distribution cable may be directly drawn to the end user's termination box within a suitable drop tube extending from the tapping window to the termination box.

In any case (drop cable or drop tube), both the first window and the tapping window cut in the external sheath of the distribution cable are typically protected against seepage and dust infiltration by suitable boxes (also termed herein after "optical boxes") fixed to the distribution cable. The optical box protecting the tapping window also typically has the function of housing any extra-length of the fibers and of protecting the engagement between the distribution fiber and a drop element.

In the following description and in the claims, as "drop element" it is meant an elongated element suitable for engaging with one or more distribution fibers extracted from a distribution cable at a mid-span position thereof, for the purpose of connecting an end user (in particular, her/his termination box) to the distribution cable. A drop element may be a drop cable comprising a drop fiber suitable for being connected (e.g. by means of a mechanical splice or fusion splice) to a distribution fiber. Alternatively, the drop element may be a drop tube configured to receive and guide towards the user's termination box a distribution fiber.

WO 2009/076536 discloses a wall box for mid-span access location of a telecommunication cable which comprises an enclosure having a main body and a cover for opening and closing the front side of the main body. A splice tray is provided within the enclosure, with a fiber storage walls around which excess fiber can be looped and splice sleeve holders for holding splice sleeves used to provide mechanical support to a fusion splice between two optical fibers.

US 2011/293234 A1 discloses a cable storage unit having an enclosure body including a casing, wherein a main storage area is provided. Two removable mounting plates are mounted onto the casing and mounted within the main storage area, the removable mounting plates having front and back surfaces, and, upon mounting the removable mounting plates onto the casing, a cable storage area is formed between the back surface of the removable mounting plates and an inside surface of the first casing. Cable management units are coupled to the back surface of the removable mounting plates and are configured to secure at least one coil of cable to the removable mounting plates within the cable storage area.

### Summary of the invention

The Applicant has noticed that the wall box of WO 2009/076536 exhibits some drawbacks.

The wall box of WO 2009/076536 may be used for connecting two or more end users to the distribution cable at a same mid-span position thereof. For this purpose, the operator typically performs a field intervention during which she/he cuts multiple distribution fibers and extracts them from a same tapping window cut in the external sheath of the distribution cable.

Then, if all end users have already requested to be connected, during the same field intervention the operator may connect each extracted distributed fiber to a respective end user's termination box as described above (e.g. using a drop cable) and use the wall box of WO 2009/076536 to house all the fiber extra-lengths and the optical connectors.

Otherwise, the operator connects to distribution fibers only the end user(s) who have already requested to be connected. The unused distribution fibers already cut and extracted may be coiled and stored within the wall box. If, at a later moment, another end user requests to be connected, another field intervention is required, during which the operator opens the wall box and uses one of the unused distribution fibers stored therein for connecting the new end user.

The Applicant has noticed that the latter operation presents a high risk of damaging the already connected fibers. Since the unused distribution fibers are arranged on the same tray as the already connected ones, extracting the unused distribution fibers for connecting them requires extracting all the fibers from the tray, including the already connected ones. Such operation is very critical and exposes the already connected fibers to the risk of being damaged or broken.

The risk is particularly high in the considered context of façade applications, wherein boxes are required with particularly reduced size, so as to minimize the visual impact of the boxes fixed to the houses' façade. Under such dimensional constraints the space within the box is particularly narrow, thereby making the handling of the fibers particularly ticklish.

In view of the above, the Applicant has tackled the problem of providing an optical box for an optical access network and a method for installing an optical access network which overcome the aforesaid problem.

In particular, the Applicant has tackled the problem of providing an optical box for an optical access network whose size is compliant with typical requirements of façade applications and which, at the same time, makes the operation of connecting an end user to a distribution cable at the same mid-span position where other end users have already been connected particularly operator friendly and safe for the already connected end users.

The Applicant has also tackled the problem of providing a method for installing an optical access network whereby the operation of connecting an end user to a distribution cable at the same mid-span position where other users have already been connected is particularly operator friendly and safe for the already connected end users.

According to embodiments of the present invention, the above problems are solved by an optical box for an optical access network, comprising an outer casing and two plates detachable therefrom. The outer casing comprises a first fixing member for fixing the outer casing to an optical cable (e.g. the distribution cable) of the optical access network at a mid-span position thereof. The detachable plates are configured to be completely housed within the outer casing, side by side on a same plane parallel to a bottom of the outer casing. Each plate comprises a second fixing member configured to fix the plate to an end of a respective drop element of the optical access network (e.g. a drop cable or a drop tube).

In order to connect a first end user to the distribution cable of an optical access network at a certain mid-span position thereof using such optical box, a tapping window is cut in the external sheath of the distribution cable at the mid-span position, whose length is higher than the length of one of the two detachable plates. Then, a first previously cut distribution fiber is drawn through the tapping window and the outer casing of the optical box with the detachable plates detached therefrom is fixed to the distribution cable, so that the tapping window is entirely contained within the outer casing. The operator then fixes an end of a first drop element (e.g. a first drop cable) to a first one of the detachable plates and completely houses both the detachable plates to the outer casing. The operator then connects the first end user to the distribution cable by engaging the first extracted distribution fiber with the first drop element (e.g. by making a fusion splice between the first extracted distribution fiber and the drop fiber of the first drop cable). The operator then closes the optical box.

If, at a later time, a second end user has to be connected to the distribution cable at the same mid-span position, the operator reopens the optical box and extracts only the second, unused detachable plate from the outer casing, thereby exposing a portion of the underlying tapping window, and extracts a second previously cut distribution fiber therefrom. The operator then fixes an end of a second drop element (e.g. a second drop cable) to the second detachable plate and then completely houses again it within the outer casing. The operator then connects the second end user to the distribution cable by engaging the second extracted distribution fiber with the second drop element (e.g. by making a fusion splice between the second extracted distribution fiber and the drop fiber of the second drop cable). The operator then closes again the optical box.

It may be appreciated that, in order to connect the second user to the distribution cable, the operator performs a number of operations, none of which involves or affects the already deployed connection between the first end user and the distribution cable. During the whole operation, indeed, neither the first extracted distribution fiber, nor the first detachable plate, nor the first drop element are displaced or even touched by the operator. The operator therefore advantageously does not risk to damage them, even if she/he does not have the manual skill of more experienced operators.

Moreover, even if the optical box comprises two plates (one for each end user) which may be accessed and handled independently, their side-by-side arrangement advantageously does not entail any increase of the box thickness and width. Hence, the above advantage in terms of minimizing the risk of damaging already connected fibers is achieved without entailing any increase in the box thickness and width, which may be tailored in conformity with the typical requirements of façade installations.

The present invention provides an optical box for installing an optical access network at a mid-span position according to claim 1.

Preferably, the two plates are configured to be aligned along a longitudinal direction of the optical cable, when the two plates are completely housed side by side within the outer casing and when the outer casing is fixed to the optical cable.

Preferably, the outer casing comprises two recesses configured to allow the passage of two drop elements, each one of the two recesses being provided in a sidewall of the outer casing at a position corresponding to a respective plate.

According to preferred embodiments, each one of the two plates comprises:
- a first surface comprising the second fixing member;
- a second surface opposite to the first surface and comprising an area for arranging an extra-length of one or more optical fibers extracted from the optical cable and/or from the drop element; and
- a perimeter edge exhibiting an indentation which forms a fiber passage configured to allow passage of the one or more optical fibers from the first surface to the second surface of the plate.

Preferably, each one of the two plates is configured to be completely housed within the outer casing with the first surface facing the bottom of the outer casing.

Preferably, the first surface of each one of the two plates comprises at least one first attaching member configured to attach the plate to the bottom of the outer casing, and the bottom of the outer casing comprises at least one second attaching member configured to engage with the at least one first attaching member.

According to an advantageous variant, the at least one first attaching member comprises at least one pillar, and the at least one second attaching member comprises at least one hollow cylinder configured to receive the at least one pillar.

Preferably, each one of the two plates comprises, on the first surface, at least one guiding wall configured to define two alternative fiber paths running over the first surface, from the second fixing member configured to fix the plate to the end of the drop element, to the fiber passage formed by the indentation in the perimeter edge of the plate.

Preferably, the two alternative paths are configured to guide an optical fiber exiting the end of the drop element so that it reaches the fiber passage from anyone of two opposite directions.

Preferably, each one of the two plates comprises a connector holder on the second surface.

Preferably, the outer casing is configured to be sealed against seepage and dust infiltration, when in use.

According to advantageous variants, the outer casing comprise a perimeter trench suitable for being filled with a sealing material.

Optionally, each one of the two plates also comprises a detachable cap associated with the second fixing member, the detachable cap being configured to engage one of the two recesses configured to allow passage of the drop element, when the drop element is not present.

According to another aspect, the present invention provides an assembly comprising an optical cable, at least one drop element and an optical box housing an engagement between the optical cable and the at least one drop element at a mid-span position of the optical cable, wherein the optical box is as set forth above.

The present invention also provides a method for installing an optical access network at a mid-span position according to claim 15.

### Brief description of the drawings

The present invention will become fully clear by reading the following detailed description, given by way of example and not of limitation, to be read by referring to the accompanying drawings, wherein:
- Figures 1a and 1b are perspective views of the outer casing of an optical box according to an embodiment of the present invention;
- Figures 2a and 2b are perspective views of the detachable plate of an optical box according to an embodiment of the present invention;
- Figures 3a to 3j show different steps of the method for installing an optical access network using the optical box of Figures 1a, 1b, 2a, 2b; and
- Figure 4 is a flow chart of the method for installing an optical access network according to an embodiment of the present invention.

### Detailed description of preferred embodiments of the invention

As mentioned above, the optical box according to embodiments of the present invention comprises an outer casing and two plates detachable from the outer casing.

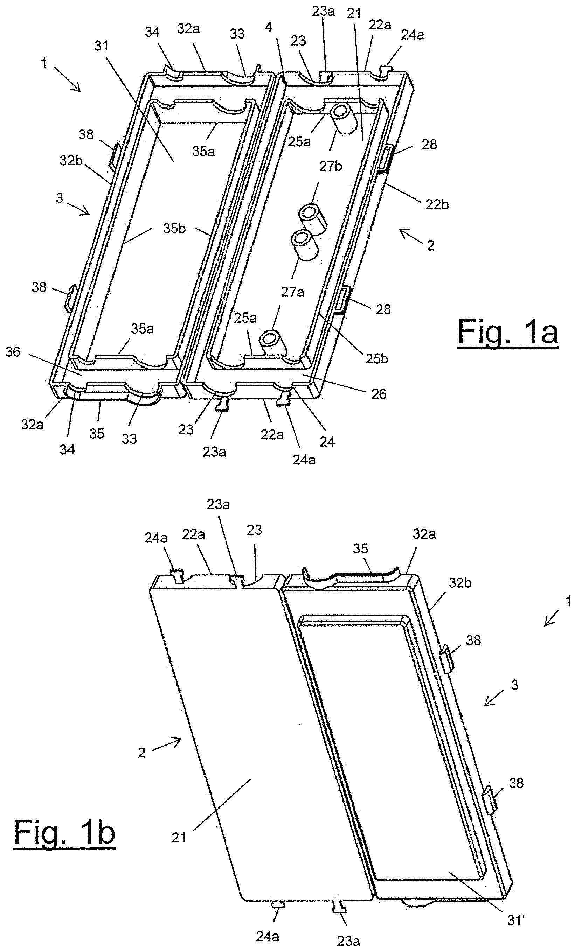

The outer casing 1 according to an embodiment of the present invention is shown in Figures 1a and 1b.

The outer casing 1 comprises a base 2 and a cover 3. The base 2 preferably has a substantially rectangular flat bottom 21 and four sidewalls, including two short sidewalls 22a and two long sidewalls 22b.

Each short sidewall 22a exhibits a U-shaped recess 23 configured to allow passage of an optical cable, in particular a distribution cable of an optical access network. Two further U-shaped recesses 24 are preferably provided in the sidewalls 22a or 22b, to allow passage of respective drop elements, for instance drop cables or drop tubes of an optical access network. Each recess 24 is preferably provided at a position corresponding to a respective detachable plate. By way of example, according to the embodiments shown in the drawings, a further U-shaped recesses 24 are provided on each sidewall 22a.

The base 2 is also provided with at least one fixing member 23a configured to fix the optical cable entering and exiting the base 2 through the recesses 23 (namely, the distribution cable) to the outer casing 1. In the embodiment shown in the drawings, such fixing element comprise - for each recess 23 - a respective tab protruding 23a towards the exterior of the base 2 in proximity of the recess 23.

The base 2 is also optionally provided with at least one fixing member 24a configured to fix drop elements (namely, drop cables or drop tubes) entering the base 2 through one of the recesses 24 to the outer casing 1. In the embodiment shown in the drawings, such means comprise - for each recess 24 - a tab 24a protruding towards the exterior of the base 2 in proximity of the recess 24.

The base 2 of the outer casing 1 preferably comprises inner walls 25a, 25b defining - together with the sidewalls 22a, 22b - a perimeter trench 26 suitable for being filled with a sealing material (not shown in the drawings), for the purpose of efficiently sealing the outer casing 1 against seepage and dust infiltration. The sealing material may be e.g. a gel by which the trench 26 is filled upon manufacturing of the outer casing 1, or a preformed sealing member (e.g. a preformed rubber member) conformed to fit in the trench 26. Alternatively, gaskets and/or grommets may be provided for appropriate sealing. The short inner sidewalls 25a preferably comprise U-shaped recesses aligned with the recesses 23 and 24, to allow passage of the distribution cable and drop element.

The base 2 of the outer casing 1 optionally comprises at least two attaching members 27a, 27b, each one being configured to attach a respective detachable plate to the base 2. Each attaching member 27a, 27b preferably comprise at least one hollow cylinder 27a, 27b configured to receive at least one corresponding pillar provided on the detachable plate, as it will be described in detail herein after. In the embodiment shown in the drawings, the base 2 comprises two hollow cylinders 27a and two hollow cylinders 27b protruding from the bottom 21 of the base 2. The hollow cylinders 27a, 27b are arranged parallel to the long sidewalls 22b of the base 2.

The cover 3 preferably has a ceiling 31 and four sidewalls, including two short sidewalls 32a and two long sidewalls 32b.

Each short sidewall 32a exhibits a U-shaped recess 33 configured to match with the recess 23 in the corresponding sidewall 22a of the base 2, so as to allow passage of the distribution cable. Each sidewall 32a also exhibits a further U-shaped recess 34 configured to match with the recess 24 in the corresponding sidewall 22a of the base 2, so as to allow passage of drop elements (drop cables or drop tubes).

The U-shaped recesses 33 and 34 on each short sidewall 32a of the cover 3 are preferably protected by a protection winglet 35 protruding from the sidewall 32a toward the exterior of the cover 3.

The cover 3 of the outer casing 1 preferably comprises inner walls 35a, 35b defining - together with the sidewalls 32a, 32b - a perimeter trench 36 filled with a sealing material (e.g. a gel or a rubber, not shown in the drawing) and suitable for matching with the trench 26 in the base 2, so as to form a sealing chamber efficiently sealing the outer casing 1 against seepage and dust infiltration. The short inner sidewalls 35a preferably comprise U-shaped recesses aligned with the recesses 33 and 34, to allow passage of the distribution cable and drop elements.

A central portion 31' of the bottom 31 of the cover 3, which is enclosed by the inner walls 35a, 35b, is preferably lifted relative to the outer portion of the bottom 31, so that the central chamber of the outer casing 1 - which is defined by the inner walls 25a, 25b of the base 2 and the inner walls 35a, 35b of the cover 3 - has a thickness higher than the surrounding sealing chamber.

The cover 3 is optionally hinged to the base 2, e.g. by means of a life hinge 4. Alternatively, the cover 3 may be detachable from the base 2.

The base 2 preferably comprise first securing members 28 and the cover 3 preferably comprises corresponding second securing members 38 configured to cooperate with the first securing members to secure the cover 3 on the base 2, so as to close the outer casing 1.

The outer casing 1 has a width (namely, a size along the short sidewalls 22a) preferably comprised between 50 mm and 65 mm, more preferably between 55 mm and 60 mm. Further, the outer casing 1 has a length (namely, a size along the long sidewalls 22b) preferably comprised between 150 mm and 180 mm, more preferably between 155 mm and 165 mm, e.g. 160 mm. Further, the outer casing 1 has a thickness comprised between 20 mm and 25 mm, more preferably between 22 mm and 25 mm.

As mentioned above, the optical box according to embodiments of the present invention comprises two detachable plates 5', 5". The detachable plates 5', 5" preferably have the same structure.

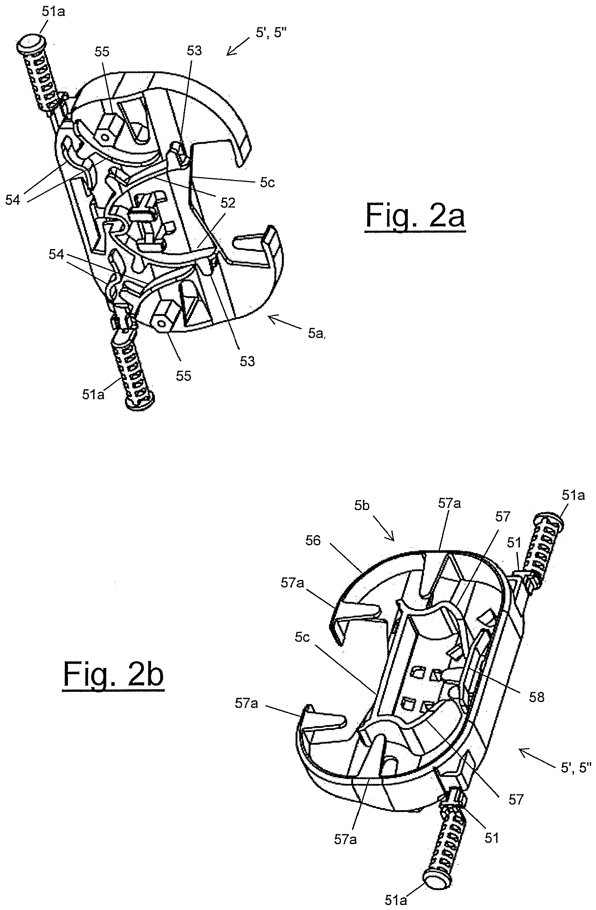

The structure of each detachable plate 5', 5" according to a preferred embodiment of the present invention is shown in Figures 2a, 2b.

As shown in Figures 2a, 2b, each detachable plate 5', 5" of the optical box is a flat plate having a substantially rectangular shape with rounded corners, and having two opposite surfaces 5a (also termed herein after "first surface" and shown in Figure 2a) and 5b (also termed herein after "second surface" and shown in Figure 2b).

The detachable plates 5' and 5" are configured to be completely housed within the outer casing 1 - in particular, within the central chamber defined by the inner walls 25a, 25b of the base 2 and the inner walls 35a, 35b of the cover 3 -when the outer casing 1 is closed (namely when the cover 3 is secured to the base 2), the detachable plates 5' and 5" being arranged side by side on a same plane parallel to the bottom 31 of the base 2 and aligned along the long sidewalls 22b of the base 2 (or along the longitudinal direction of the distribution cable, when the outer casing 1 is fixed thereto). Each detachable plate 5', 5" accordingly has width lower than the width of the base 2 and a length lower than half the length of the base 2. In particular, each detachable plate 5', 5" preferably has a width lower than the length of the inner walls 25a of the base 2 and a length lower than half the length of the inner walls 25b.

The first surface 5a of each detachable plate 5', 5" preferably comprises at least one fixing member 51 configured to fix an end of a drop element (e.g. a drop cable or a drop tube) to the detachable plate 5', 5". According to the embodiment shown in Figures 2a and 2b, such fixing member 51 comprises a tab 51 configured to fix optical elements (in particular, drop cables or drop tubes) of different diameters by means e.g. of a collar wound about the drop element and the tab 51. The tabs 51 are preferably arranged at a rounded corner of the detachable plate 5', 5". More preferably, as shown in Figure 2b, the first surface 5a of the detachable plate 5', 5" comprises two tabs 51, which are preferably arranged at the two rounded corners adjacent to a same long side of the detachable plate 5', 5".

Each fixing member 51 is preferably provided with a respective detachable cap 51a. Each cap 51a is configured to - when it is not detached from the plate 5', 5" - engage a respective U-shape recess 24 in the base 2, so as to allow hermetically sealing of the outer casing 1 against seepage and dust infiltration, as it will be described in detail herein after.

On the first surface 5a of each detachable plate 5', 5", preferably, two curved guiding walls 52 are provided. The curved guiding walls 52 are preferably arranged so as to define two curved fiber paths on the first surface 5a of the detachable plate 5', 5". Preferably, a number of retaining tabs 53 radially protrude from the upper edge of the curved guiding walls 52 towards the perimeter of the detachable plate 5', 5".

Preferably, on the first surface 5a, a couple of directing walls 54 arranged in the shape of "V" is interposed between each tab 51 and each curved guiding wall 52.

Preferably, each detachable plate 5', 5" comprises on the first surface 5a at least one attaching member 55 configured to cooperate with one of the attaching members 27a, 27b provided on the base 2 of the outer casing 1, to attach the detachable plate 5', 5" to the outer casing 1.

Such at least one attaching member 55 preferably comprises at least one pillar configured to be fitted in one of the hollow cylinders 27a, 27b of the base 2. In the embodiment shown in the drawings, two pillars 55 are provided on the first surface 5a of each detachable plate 5', 5". The pillars 55 have a hexagonal cross section configured so that the vertexes of the hexagon interfere with the central holes of the hollow cylinders 27a, 27b, when the pillars 55 are fitted therein. The pillars 55 are preferably arranged along the long side of each detachable plate 5', 5" which is adjacent to the rounded corners where the tabs 51 are arranged.

The attaching members 27a, 27b and 55 are optional. According to embodiments not shown in the drawings, the cover 3 may be configured to block the detachable plates 5', 5" in the base 2 when it is closed onto the base 2.

Each detachable plate 5', 5" preferably comprises a perimeter wall 56 projecting from the perimeter edge of the detachable plate 5', 5" and surrounding the second surface 5b of the detachable plate 5', 5".

The perimeter edge of each detachable plate 5', 5" preferably exhibits an indentation 5c that, as it will be described in detail herein after, forms a fiber passage allowing a drop fiber extracted from the drop cable to pass from the first surface 5a to the second surface 5b of the detachable plate 5', 5". The indentation 5c is preferably provided at a median position along a long side of the detachable plate 5', 5", preferably the long side opposite to that adjacent to the rounded corners where the tabs 51 are arranged on the first surface 5a.

On the second surface 5b of each detachable plate 5', 5", preferably, two curved inner walls 57 are provided which, together with the perimeter wall 56, define on the second surface 5b of the detachable plate 5', 5" a peripheral area suitable for arranging an extra-length of the distribution fiber and, if present, the drop fiber, as it will be described in detail herein after. Fiber retaining tabs 57a preferably radially protrude from the upper edge of the outer wall 56 and extend towards the curved inner walls 57.

The second surface 5b of the detachable plate 5' 5" also optionally comprises a connector holder 58 configured to hold - if present - an optical connector between distribution fiber and drop fiber, such as a mechanical splice or a fusion splice. The connector holder 58 is configured to keep the optical connector in an elevated position above the second surface 5b, so that the extra-length of the distribution fiber and drop fiber may be arranged also underneath the optical connector, which accordingly acts as a fiber retaining element. This arrangement of the connector holder 58 advantageously allows saving space on the second surface 5b of the detachable plate 5', 5". The connector holder 58 is preferably arranged at a median position along a long side of the detachable plate 5', 5", preferably along the same long side of the detachable plate 5', 5" which is adjacent to the rounded corners where the tabs 51 are arranged on the first surface 5a.

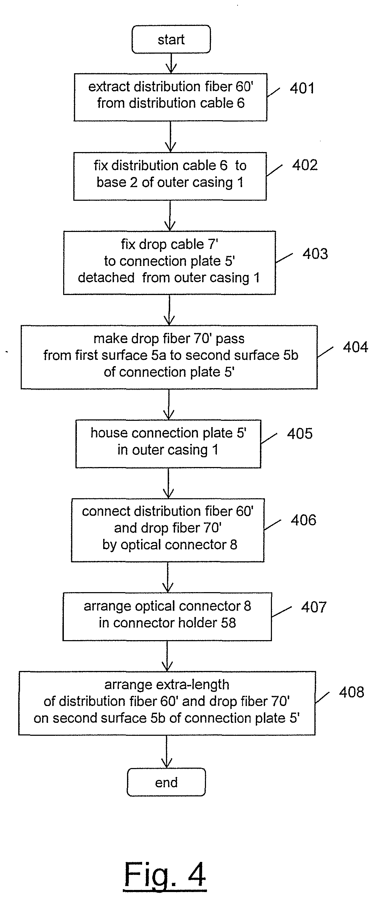

The method for installing an optical access network using an optical box 100 comprising the outer casing 1 and the detachable plates 5', 5" will be now described in detail herein after with reference also to the flow chart of Figure 4.

First of all, the operator extracts a first distribution fiber 60' from a distribution cable 6 (step 401).

For this purpose, a first window is cut in the external sheath of the distribution cable 6 at a first mid-span position thereof and then the first distribution fiber 60' is cut through this first window. Then, a tapping window 61 is cut in the external sheath of the distribution cable 6 at a second mid-span position thereof, intermediate between the distribution cable end connected to the distribution cabinet and the first window, possibly in proximity location where end user resides (e.g. on the façade of the user's house). The length of the tapping window 61 is preferably higher than the length of one of the two detachable plates 5', 5". The first distribution fiber 60' is then drawn through the tapping window 61.

Then, the operator preferably fixes the distribution cable 6 to the outer casing 1 of the optical box 100, while the detachable plates 5', 5" are detached therefrom (step 402).

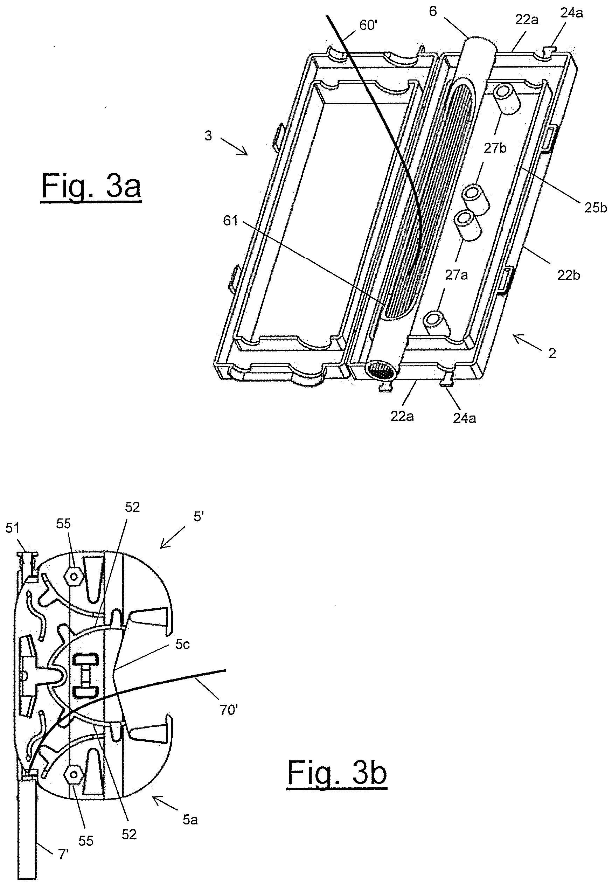

For this purpose, the operator preferably arranges the distribution cable 6 in the base 2 parallel with the long sides 22b of the base 2, with the tapping window 61 completely contained within the inner walls 25a, 25b of the base 2 and facing upwardly, as schematically depicted in Figure 3a. In order to enter and exit the base 2 of the outer casing 1, the distribution cable 6 engages the recesses 23 of the short sidewalls 22a of the base 2. In order to fix the distribution cable 6 to the base 2, the operator may use two collars, each one being wound about the distribution cable 6 and the tab 23a provided close to each recess 23.

The operator then preferably fixes an end of a first drop element 7' (for instance, a first drop cable) to one of the two detachable plates, e.g. the detachable plate 5' (step 403), while both the detachable plates 5' and 5" are still detached from the outer casing 1.

In particular, the operator preferably removes a length of the sheath of the first drop cable 7' so as to free a corresponding length of a first drop fiber 70'. Then, the operator preferably fixes the end of the sheath of the first drop cable 7' to the first surface 5a of the detachable plate 5' by using one of the two tabs 51 provided on the detachable plate 5'. More particularly, the operator chooses the tab 51 which, when the detachable plate 5' is housed within the base 2, faces one of the two inner short sidewalls 25a and, in particular, its U-shaped recess allowing passage of a drop element. The operator then removes both the detachable caps 51a from the plate 5' and fixes the end of the sheath of the first drop cable 7' to the selected tab 51 (as schematically depicted in Figure 3b), while keeping the first drop fiber 70' exiting from the end of the drop cable sheath on the first surface 5a of the detachable plate 5'. Preferably, the operator winds e.g. a collar about the tab 51 and the sheath of the first drop cable 7' to secure the first drop cable 7' to the detachable plate 5'.

Optionally, if the first drop cable 7' comprises reinforcing yarns, step 403 also comprises fixing these yarns to the detachable plate 5', for increasing the cable retention force.

Then, the operator preferably makes the first drop fiber 70' pass from the first surface 5a to the second surface 5b of the detachable plate 5' (step 404).

For this purpose, the operator preferably arranges the first drop fiber 70' on the first surface 5a of the detachable plate 5' according to anyone of the two alternative, curved paths defined by the curved guiding walls 52 and directing walls 54 and leading from the end of the sheath of the first drop cable 7' to the fiber passage formed by the indentation 5c in the perimeter edge of the detachable plate 5'.

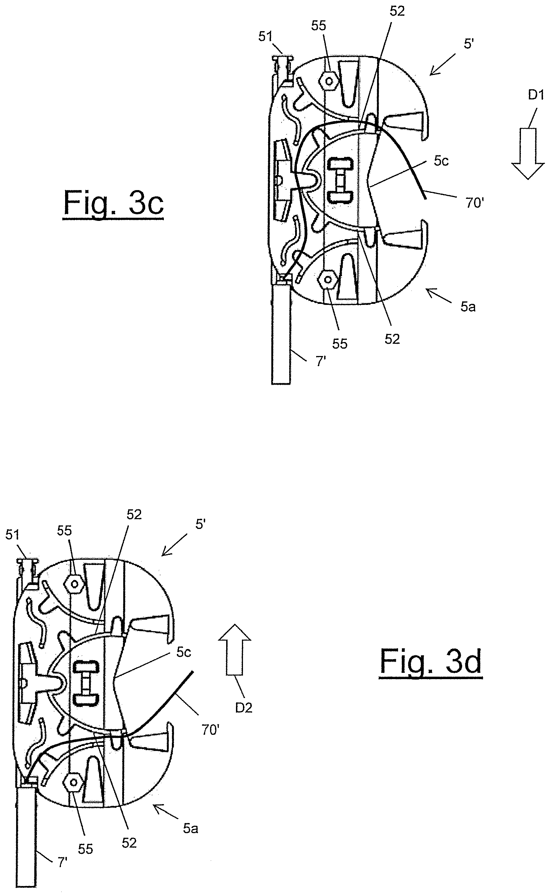

For instance, in the configuration shown in Figure 3c, the operator makes the first drop fiber 70' pass straight along the long side adjacent to the rounded corner where the end of the sheath of the first drop cable 7' is fixed and then turn around the upper curved guiding wall 52 along a clockwise direction, so as to arrive to the indentation 5c from a first direction D1. Otherwise, as schematically depicted in Figure 3d, the operator may make the first drop fiber 70' turn towards the opposite long side of the detachable plate 5' and then follow the lower curved guiding wall 52 along a counterclockwise direction, so as to arrive to the indentation 5c from a second direction D2 opposite to the direction D1.

Then, the operator preferably houses the detachable plate 5' - with the first drop cable 7' fixed thereto as described above - in the outer casing 1 of the connection box (step 405).

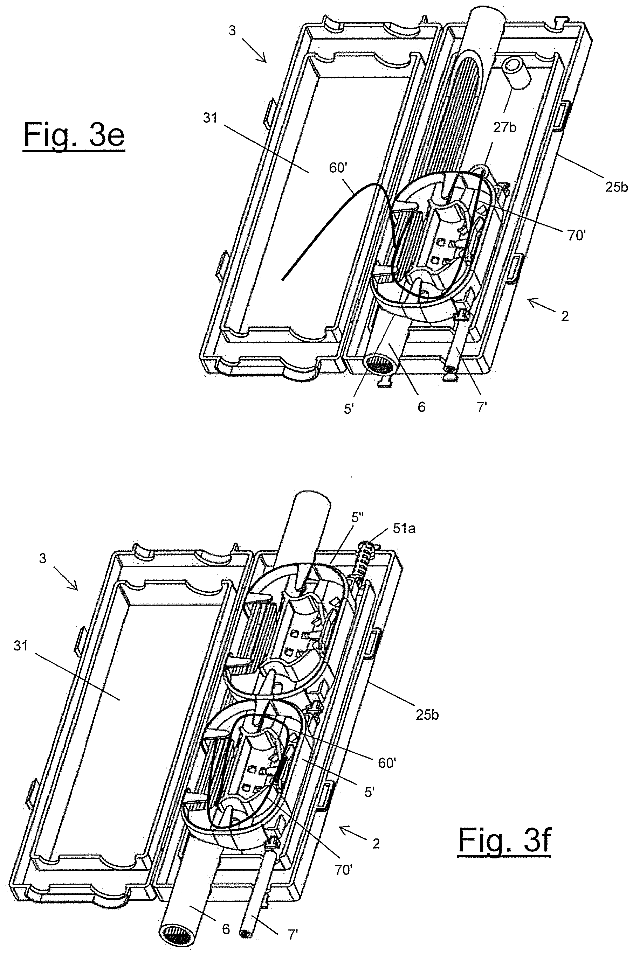

For this purpose, the operator preferably turns over the detachable plate 5' so that its first surface 5a faces the bottom 21 of the base 2 and its second surface 5b faces upwardly. The operator then preferably pushes the detachable plate 5' in the base 2 - in particular, in the central chamber defined by the inner walls 25a, 25b - until the pillars 55 on the first surface 5a of the detachable plate 5' fit into the hollow cylinders 27a of the base 2. This way, the detachable plate 5' is completely contained within the central chamber of the base 2 and is fixed thereto, as shown in Figure 3e. The operator may then temporarily lean the first drop fiber 70' on the second surface 5b of the detachable plate 5.

If the hollow cylinders 27a, 27b and pillars 55 are absent (as described above, such attaching members are optional), at step 405 the operator only arranges the detachable plate 5' in the base 2. The detachable plate 5' will be then blocked in the base 2 at the end of the installation procedure, when the cover 3 will be closed on the base 2.

While the operator inserts the detachable plate 5' in the base 2 of the outer casing 1, she/he preferably keeps the first distribution fiber 60' apart, e.g. she/he may temporarily lean it on the bottom 31 of the cover 3, as schematically depicted in Figure 3e. When the detachable plate 5' is housed within the base 2, the fiber passage formed by the indentation 5c in the perimeter edge of the detachable plate 5' is located above the tapping window 61 of the distribution cable 6, from which the first distribution fiber 60' exits the distribution cable 6. This allows the operator to bring also the first distribution fiber 60' directly from the distribution cable 6 to the second surface 5b of the detachable plate 5' through the fiber passage formed by the indentation 5c (step not shown in Figure 4), as depicted in Figure 3e.

As shown in Figure 3e, the first distribution fiber 60' and the first drop fiber 70' exit the fiber passage formed by the indentation 5c along opposite directions. This is achieved by choosing the proper arrangement of the first drop fiber 70' between those shown in Figures 3c, 3d.

It may also be noticed that, in the configuration of Figure 3e, the first drop cable 7' enters the base 2 through one of the recesses 24 in the short sidewalls 22a of the base 2. Optionally, the operator may fix the first drop cable 7' to the base 2, e.g. by winding a collar about the first drop cable 7' and the tab 24a provided close to the recess 24.

Then, the operator preferably connects the first distribution fiber 60' extracted from the distribution cable 6 to the first drop fiber 70' extracted from the end of the sheath of the first drop cable 7' (step 406). For this purpose, the operator preferably uses an optical connector, such as a mechanical splice or a fusion splice.

The operator then preferably arranges the optical connector in the connector holder 58 provided on the second surface 5b of the detachable plate 5' (step 407). As mentioned above, since the connector holder 58 keeps the optical connector in an elevated position above the extra-length of the first distribution fiber 60' and first drop fiber 70', the optical connector advantageously acts as a fiber retaining element.

Then, the extra-length of the fibers is arranged on the second surface 5b of the detachable plate 5' (step 408). In particular, the operator preferably coils such fiber-extra length and arranges it in the peripheral area defined by the perimeter wall 56 and curved inner walls 57 provided on the second surface 5b of the detachable plate 5'.

Then, if no other end user shall be connected to the distribution cable 6 at the same mid-span position, the operator preferably houses also the other detachable plate 5" - with no drop element fixed thereto - in the outer casing 1 of the connection box. For this purpose, the operator preferably detaches from the plate 5" the cap 51a which, when both the plates 5' and 5" are housed within the base 2, projects towards the plate 5'. Then, the operator preferably uses the hollow cylinders 27b of the base 2, as described above in connection with step 405. This way, also the detachable plate 5" is completely contained within the central chamber of the base 2 and is fixed thereto, as shown in Figure 3f. It may be appreciated that its undetached cap 51a opposite to the plate 5' engages the recess 24 of the base 2 which is free (namely, not engaged by any drop element). This advantageously contributes to provide a hermetic sealing of the outer casing 1.

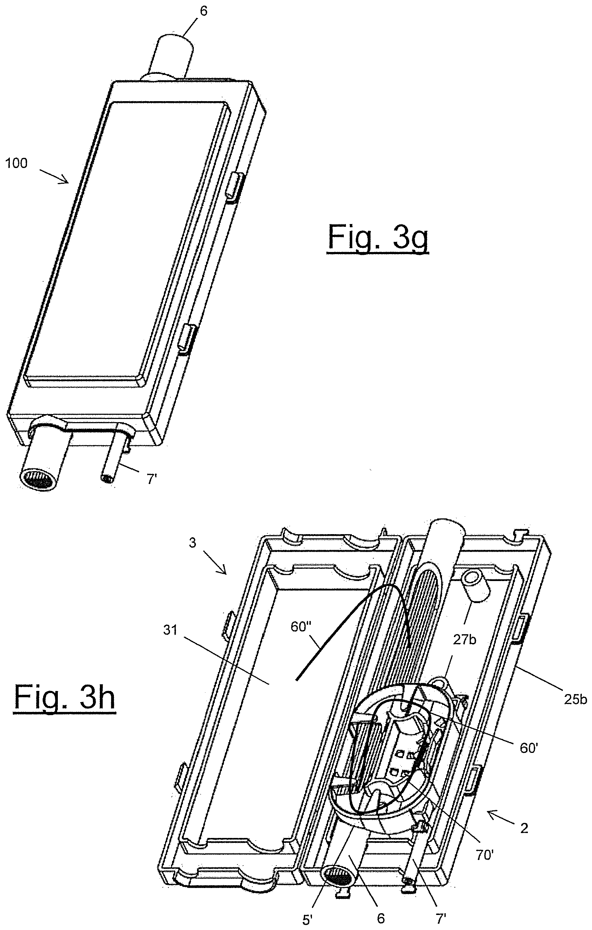

The operator finally closes the outer casing 1 of the connection box 100, as schematically depicted in Figure 3g. For this purpose, the operator preferably secures the cover 3 to the base 2, by means of the first securing members 28 and second securing members 38 provided on the base 2 and cover 3, respectively.

In case the sealing material is in the form of a preformed sealing member (e.g. a rubber preformed sealing member) conformed to fit in the trench 26, before securing the cover 3 to the base 2, the operator preferably fits the preformed sealing member in the trench 26, thereby providing a hermetically sealing against seepage and dust infiltration.

If, at a later moment, a second end user has to be connected to the distribution cable 6 at the same mid-span position, the operator preferably reopens the optical box 100 and extracts therefrom only the unused detachable plate 5" from the base 2 of the outer casing 1. This way, a portion only of the underlying tapping window 61 previously cut in the external sheath of the distribution cable 6 is exposed.

Then, a second distribution fiber 60" is cut and drawn through the tapping window 61, as schematically depicted in Figure 3h.

The operator then preferably removes from the plate 5" the cap 51a opposite to the plate 5' and fixes an end of a second drop element 7" (for instance, a second drop cable) to the detachable plate 5" while it is detached from the outer casing 1, as already described above with reference to step 403. It shall be noticed that, in the meanwhile, the plate 5' with the first distribution fiber 60' and first drop fiber 70' already connected and arranged thereon need not to be displaced from its position within the base 2.

Then, the operator preferably makes a second drop fiber 70" extracted from the end of the second drop cable 7' pass from the first surface 5a to the second surface 5b of the detachable plate 5", as described in detail above in connection with step 404.

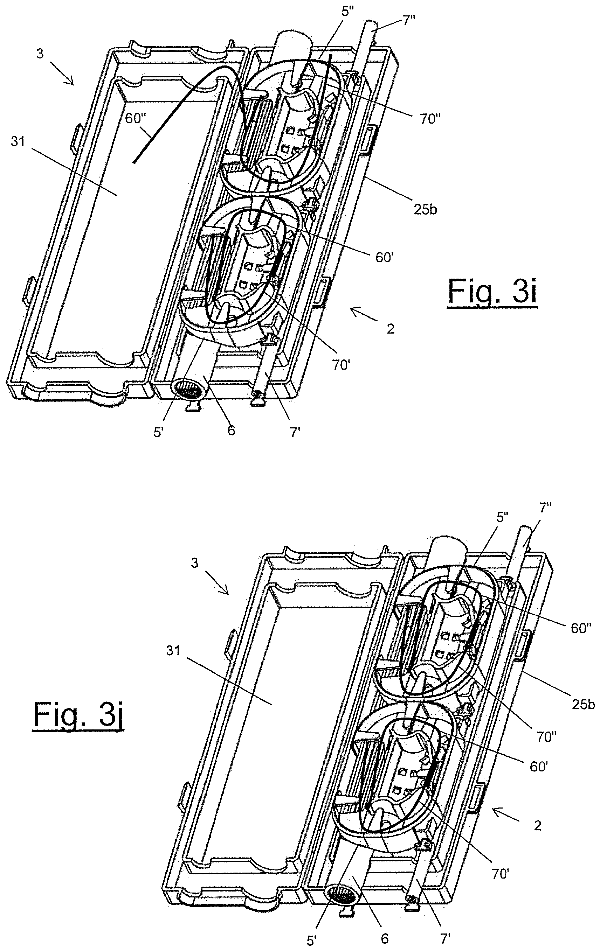

Then, the operator preferably houses again the detachable plate 5" - with the second drop cable 7" fixed thereto - in the outer casing 1 of the connection box, besides the detachable plate 5', as described above in connection with step 405 and as also shown in Figure 3i. At the end of such step both the second distribution fiber 60" and the second drop fiber 70" lay on the second surface 5b of the detachable plate 5", which they reach through the fiber passage formed by the indentation 5c of the plate 5", as depicted in Figure 3i.

Then, the operator preferably connects the second distribution fiber 60" extracted from the distribution cable 6 to the second drop fiber 70" extracted from the end of the sheath of the second drop cable 7", as described above in connection with step 406.

The operator then preferably arranges the optical connector between the second distribution fiber 60" and the second drop fiber 70" in the connector holder 58 provided on the second surface 5b of the detachable plate 5", as described above in connection with step 407.

Then, the extra-length of the fibers 60" and 70" is arranged on the second surface 5b of the detachable plate 5", as described above in connection with step 408 and as schematically depicted in Figure 3j.

The operator finally closes again the outer casing 1 of the connection box 100, as described above with reference to Figure 3e.

It may be appreciated that, in order to connect the second user to the distribution cable 6, the operator performs a number of operations, none of which involves or affects the already deployed connection of the first end user to the distribution cable 6. During the whole operation, indeed, neither the first plate 5' nor the fibers 60' and 70' arranged thereon are displaced or even touched by the operator. The operator therefore advantageously does not risk to damage them, even if she/he does not have the manual skill of more experienced operators. This is advantageously due to the side-by-side arrangement of the detachable plates 5', 5", which substantially splits the area within the outer casing 1 of the optical box 100 into two logically separated areas (one for each end user) which cover different portions of the tapping window and which do not overlap, so that the content of each one of such areas may be handled independently.

Moreover, even if the optical box comprises two plates 5', 5" (one for each end user) which may be accessed and handled independently, their arrangement side-by-side advantageously does not entail any increase of the box thickness and width. Hence, the above advantage in terms of minimizing the risk of damaging already connected fibers is achieved without entailing any increase in the box thickness and width, which may be tailored in conformity with the typical requirements of façade installations.

The structure of each single detachable plate 5'; 5" exhibits further advantages.

In the connection box 100, indeed, the components needed to hold the drop element (drop cable or drop tube), to guide the fibers and - if present - to hold the optical connection between fibers are provided on the detachable plates 5', 5". The outer casing 1 does not comprise any tab or protrusion, except the fixing member(s) 23a for fixing the distribution cable 6 and the attaching members 27a, 27b. Hence, the outer casing 1 may have a particularly simple structure with smooth surfaces (no tabs, protrusions, etc.).

On one hand, this implies that the outer casing 1 can be manufactured (e.g. by plastic molding) at a very reduced cost. Moreover, the connection box 100 may be provided to the operator with the detachable plates 5', 5" detached from the outer casing 1, hence substantially with no assembly cost. The overall cost of the connection box 100 is therefore reduced, which is particularly advantageous, since the connection box 100 is intended for a pair of end users who entirely bear its cost.

On the other hand, the absence of tabs, protrusions etc. from the surfaces of the outer casing 1 implies the absence of corresponding holes or apertures which would be inevitably formed during the manufacturing by molding. The absence of any hole or aperture on the surfaces of the outer casing 1, in combination with the fact that the detachable plates 5', 5" in use are completely housed within it, advantageously provides a box 100 which may be easily hermetically sealed against seepage and dust infiltration, and which is therefore particularly suitable for façade installation. Protection degrees from water and dust equal to IP-44 (International Protection) may be achieved by coupling the base 2 to the cover 3 in a hermetic way, with no need to provide any additional sealing component.

Besides, the operation of connecting each drop element 7', 7" to the distribution cable 6 using the connection box 100 is particularly operator-friendly, so that it may be carried out even by less experienced operators with a minimum risk of damaging the fibers.

In order to bring each drop fiber 70', 70" from the point where it exits the respective drop cable 7', 7" to the point where it is joined with the respective distribution fiber 60', 60", indeed, the operator only has to make each drop fiber 70', 70" pass from the first surface 5a to the second surface 5b of the respective detachable plate 5', 5" through the fiber passage formed by the indentation 5c in the perimeter edge of the detachable plate 5', 5". This is much easier than making the drop fiber 70', 70" pass through perimetrically closed apertures or slits.

As to the distribution fibers 60', 60", the fiber passage formed by the indentation 5c in the perimeter edge of each detachable plate 5', 5" advantageously allows to easily pass also this fiber directly above the second surface 5b of the detachable plate 5', 5", where the connection holder 58 is provided. This operation may be easily done after the detachable plate 5', 5" has been already fitted into the outer casing 1, with no need to make the distribution fiber 60', 60" pass through any perimetrically closed apertures or slits.

## Claims

1. An optical box (100) for installing an optical access network, said optical box (100) comprising:
- an outer casing (1) comprising a first fixing member (23a) configured to fix said outer casing (1) to an optical cable (6) of said optical access network at a mid-span position thereof; and
- two plates (5', 5") detachable from said outer casing (1) and configured to be completely housed within said outer casing (1) side by side on a same plane parallel to a bottom (21) of said outer casing (1), each one of said plates (5', 5") comprising a second fixing member (51) configured to fix each one of said plates (5', 5") to an end of a respective drop element (7', 7") of said optical access network.

2. The optical box (100) according to claim 1, wherein said two plates (5', 5") are configured to be aligned along a longitudinal direction of said optical cable (6), when said two plates (5', 5") are completely housed side by side within said outer casing (1) and when said outer casing (1) is fixed to said optical cable (6).

3. The optical box (100) according to any of the preceding claims, wherein said outer casing (1) comprises two recesses (24) configured to allow the passage of two drop elements (7', 7"), each one of said two recesses (24) being provided in a sidewall (22a) of said outer casing (1) at a position corresponding to a respective plate (5', 5").

4. The optical box (100) according to any of the preceding claims, wherein each one of said two plates (5', 5") comprises:
- a first surface (5a) comprising said second fixing member (51);
- a second surface (5b) opposite to said first surface (5a) and comprising an area for arranging an extra-length of one or more optical fibers (60', 60"; 70', 70") extracted from said optical cable (6) and/or from said drop element (7', 7"); and
- a perimeter edge exhibiting an indentation (5c) which forms a fiber passage configured to allow passage of said one or more optical fibers (60', 60"; 70', 70") from said first surface (5a) to said second surface (5b) of said plate (5', 5").

5. The optical box (100) according to claim 4, wherein each one of said two plates (5', 5") is configured to be completely housed within said outer casing (1) with said first surface (5a) facing said bottom (21) of said outer casing (1).

6. The optical box (100) according to claim 4 or 5, wherein said first surface (5a) of each one of said two plates (5', 5") comprises at least one first attaching member (55) configured to attach said plate (5', 5") to said bottom (21) of said outer casing (1), and said bottom (21) of said outer casing (1) comprises at least one second attaching member (27a, 27b) configured to engage with said at least one first attaching member (55).

7. The optical box (100) according to claim 6, wherein said at least one first attaching member (55) comprises at least one pillar (55), and the at least one second attaching member (27a, 27b) comprises at least one hollow cylinder (27) configured to receive the at least one pillar (55).

8. The optical box (100) according to any of claims 4 to 7, wherein each one of said two plates (5', 5") comprises, on said first surface (5a), at least one guiding wall (52, 54) configured to define two alternative fiber paths running over said first surface (5a), from said second fixing member (51) configured to fix said plate (5', 5") to said end of said drop element (7', 7"), to said fiber passage formed by said indentation (5c) in said perimeter edge of said plate (5', 5").

9. The optical box (100) according to claim 8, wherein said two alternative paths are configured to guide an optical fiber (70', 70") exiting said end of said drop element (7', 7") so that it reaches said fiber passage from anyone of two opposite directions (D1, D2).

10. The optical box (100) according to any of claims 4 to 9, wherein each one of said two plates (5', 5") comprises a connector holder (58) on said second surface (5b).

11. The optical box (100) according to any of the preceding claims, wherein said outer casing (1) is configured to be sealed against seepage and dust infiltration, when in use.

12. The optical box (100) according to claim 11, wherein said outer casing (1) comprise a perimeter trench (26) suitable for being filled with a sealing material.

13. The optical box (100) according to claim 3, wherein each one of said two plates (5', 5") also comprises a detachable cap (51a) associated with said second fixing member (51), said detachable cap (51a) being configured to engage one of said two recesses (24) configured to allow passage of said drop element (7', 7"), when said drop element (7', 7") is not present.

14. An assembly comprising an optical cable (6), at least one drop element (7', 7") and an optical box (100) housing an engagement between said optical cable (6) and said at least one drop element (7', 7") at a mid-span position of said optical cable (6), wherein said optical box (100) is according to any of claims 1 to 13.

15. A method for installing an optical access network, said method comprising:
a) extracting a first optical fiber (60') from an optical cable (6) of said optical access network at a mid-span position thereof and fixing an outer casing (1) of an optical box (100) to said optical cable (6) at said mid-span position;
b) fixing an end of a first drop element (7') to a first plate (5') of said optical box (100) while said first plate (5') is detached from said outer casing (1), completely housing said first plate (5') in said outer casing (1) of said optical box (100) and engaging said first optical fiber (60') with said end of said first drop element (7');
said method further comprising, after said first plate (5') with said end of said first drop element (7') engaged with said first optical fiber (60') fixed thereto has been completely housed in said outer casing (1):
c) extracting a second optical fiber (60") from said optical cable (6) at said mid-span position;
d) fixing an end of a second drop element (7") to a second plate (5") of said optical box (100) while said second plate (5") is detached from said outer casing (1), completely housing said second plate (5") in said outer casing (1) of said optical box (100) besides said first plate (5'), said first plate (5') and said second plate (5") being arranged side by side on a same plane parallel to a bottom (21) of said outer casing (1), and engaging said second optical fiber (60") with said end of said second drop element (7").

## Patentansprüche

1. Ein optischer Kasten (100) zur Installation eines optischen Zugangsnetzes, wobei der optische Kasten (100) Folgendes umfasst:
- ein äußeres Gehäuse (1), das ein erstes Befestigungselement (23a) umfasst, das so konfiguriert ist, dass es das äußere Gehäuse (1) an einem optischen Kabel (6) des optischen Zugangsnetzes an einer Position in der Mitte der Spannweite desselben befestigt; und
- zwei Platten (5', 5"), die von dem äußeren Gehäuse (1) abnehmbar und so konfiguriert sind, dass sie vollständig innerhalb des äußeren Gehäuses (1) nebeneinander in einer gleichen Ebene parallel zu einem Boden (21) des äußeren Gehäuses (1) untergebracht werden können, wobei jede der Platten (5', 5") ein zweites Befestigungselement (51) umfasst, das so konfiguriert ist, dass es jede der Platten (5', 5") an einem Ende eines jeweiligen Abzweigelements (7', 7") des optischen Zugangsnetzes befestigt.

2. Optischer Kasten (100) nach Anspruch 1, wobei die beiden Platten (5', 5") so konfiguriert sind, dass sie entlang einer Längsrichtung des optischen Kabels (6) ausgerichtet sind, wenn die beiden Platten (5', 5") vollständig nebeneinander in dem Außengehäuse (1) untergebracht sind und wenn das Außengehäuse (1) an dem optischen Kabel (6) befestigt ist.

3. Optischer Kasten (100) nach einem der vorhergehenden Ansprüche, wobei das äußere Gehäuse (1) zwei Ausnehmungen (24) aufweist, die so gestaltet sind, dass sie den Durchgang von zwei Abzweigelementen (7', 7") ermöglichen, wobei jede der beiden Ausnehmungen (24) in einer Seitenwand (22a) des äußeren Gehäuses (1) an einer Position vorgesehen ist, die einer jeweiligen Platte (5', 5") entspricht.

4. Optischer Kasten (100) nach einem der vorhergehenden Ansprüche, wobei jede der beiden Platten (5', 5") Folgendes umfasst:
- eine erste Fläche (5a), die das zweite Befestigungselement (51) umfasst; eine zweite Fläche (5b), die der ersten Fläche (5a) gegenüberliegt und einen Bereich zum Anordnen einer Überlänge einer oder mehrerer optischer Fasern (60', 60"; 70', 70") umfasst, die aus dem optischen Kabel (6) und/oder aus dem Abzweigelement (7', 7") herausgezogen sind; und
eine Umfangskante, die eine Vertiefung (5c) aufweist, die einen Faserdurchgang bildet, der so konfiguriert ist, dass er den Durchgang der einen oder mehreren optischen Fasern (60', 60"; 70', 70") von der ersten Oberfläche (5a) zu der zweiten Oberfläche (5b) der Platte (5', 5") ermöglicht.

5. Optischer Kasten (100) nach Anspruch 4, wobei jede der beiden Platten (5', 5") so konfiguriert ist, dass sie vollständig in dem äußeren Gehäuse (1) untergebracht ist, wobei die erste Oberfläche (5a) dem Boden (21) des äußeren Gehäuses (1) zugewandt ist.

6. Optischer Kasten (100) nach Anspruch 4 oder 5, wobei die erste Oberfläche (5a) jeder der beiden Platten (5', 5") mindestens ein erstes Befestigungselement (55) umfasst, das so konfiguriert ist, dass es die Platte (5', 5") am Boden (21) des äußeren Gehäuses (1) befestigt, und der Boden (21) des äußeren Gehäuses (1) mindestens ein zweites Befestigungselement (27a, 27b) umfasst, das so konfiguriert ist, dass es mit dem mindestens einen ersten Befestigungselement (55) in Eingriff kommt.

7. Optischer Kasten (100) nach Anspruch 6, wobei das mindestens eine erste Befestigungselement (55) mindestens eine Säule (55) umfasst, und das mindestens eine zweite Befestigungselement (27a, 27b) mindestens einen Hohlzylinder (27) umfasst, der zur Aufnahme der mindestens einen Säule (55) konfiguriert ist.

8. Optischer Kasten (100) nach einem der Ansprüche 4 bis 7, wobei jede der beiden Platten (5', 5") an der ersten Oberfläche (5a) mindestens eine Führungswand (52, 54) aufweist, die so konfiguriert ist, dass sie zwei alternative Faserwege definiert, die über die erste Oberfläche (5a) verlaufen, von dem zweiten Befestigungselement (51), das so konfiguriert ist, dass es die Platte (5', 5") an dem Ende des Abzweigelements (7', 7") befestigt, zu dem Faserdurchgang, der durch die Vertiefung (5c) in der Umfangskante der Platte (5', 5") gebildet wird.

9. Optischer Kasten (100) nach Anspruch 8, wobei die beiden alternativen Pfade so konfiguriert sind, dass sie eine optische Faser (70', 70"), die aus dem Ende des Abzweigelements (7', 7") austritt, so führen, dass sie den Faserkanal aus einer von zwei entgegengesetzten Richtungen (D1, D2) erreicht.

10. Optischer Kasten (100) nach einem der Ansprüche 4 bis 9, wobei jede der beiden Platten (5', 5") einen Steckerhalter (58) an der zweiten Oberfläche (5b) aufweist.

11. Optischer Kasten (100) nach einem der vorhergehenden Ansprüche, wobei das äußere Gehäuse (1) so konfiguriert ist, dass es gegen Sickerwasser und Staubeintritt abgedichtet ist, wenn es in Gebrauch ist.

12. Optischer Kasten (100) nach Anspruch 11, wobei das äußere Gehäuse (1) einen Umfangsgraben (26) aufweist, der mit einem Dichtungsmaterial gefüllt werden kann.

13. Optischer Kasten (100) nach Anspruch 3, wobei jede der beiden Platten (5', 5") auch eine abnehmbare Kappe (51a) umfasst, die mit dem zweiten Befestigungselement (51) verbunden ist, wobei die abnehmbare Kappe (51a) so konfiguriert ist, dass sie in eine der beiden Aussparungen (24) eingreift, die so konfiguriert sind, dass sie den Durchgang des Abzweigelements (7', 7") ermöglichen, wenn das Abzweigelement (7', 7") nicht vorhanden ist.

14. Baugruppe, die ein optisches Kabel (6), mindestens ein Abzweigelement (7', 7") und einen optischen Kasten (100) umfasst, das einen Eingriff zwischen dem optischen Kabel (6) und dem mindestens einen Abzweigelement (7', 7") an einer mittleren Spannweite des optischen Kabels (6) aufnimmt, wobei der optische Kasten (100) einem der Ansprüche 1 bis 13 entspricht.

15. Verfahren zum Installieren eines optischen Zugangsnetzes, wobei das Verfahren umfasst:
a) Herausziehen einer ersten optischen Faser (60') aus einem optischen Kabel (6) des optischen Zugangsnetzes an einer Position in der Mitte des Kabels und Befestigen eines äußeren Gehäuses (1) eines optischen Kastens (100) an dem optischen Kabel (6) an der Position in der Mitte des Kabels;
b) Befestigen eines Endes eines ersten Abzweigelements (7') an einer ersten Platte (5') des optischen Kastens (100), während die erste Platte (5') von dem äußeren Gehäuse (1) gelöst ist, wobei die erste Platte (5') vollständig in dem äußeren Gehäuse (1) des optischen Kastens (100) untergebracht wird und die erste optische Faser (60') mit dem Ende des ersten Abzweigelements (7') in Eingriff gebracht wird;
wobei das Verfahren ferner umfasst, nachdem die erste Platte (5') mit dem Ende des ersten Abzweigelements (7'), das mit der daran befestigten ersten optischen Faser (60') in Eingriff steht, vollständig in dem äußeren Gehäuse (1) untergebracht wurde:
c) Herausziehen einer zweiten optischen Faser (60") aus dem optischen Kabel (6) in der mittleren Spannweite;
d) Befestigen eines Endes eines zweiten Abzweigelements (7") an einer zweiten Platte (5") des optischen Kastens (100), während die zweite Platte (5") von dem äußeren Gehäuse (1) gelöst wird, wobei die zweite Platte (5") vollständig in dem äußeren Gehäuse (1) des optischen Kastens (100) neben der ersten Platte (5') untergebracht wird, wobei die erste Platte (5') und die zweite Platte (5") nebeneinander in einer gleichen Ebene parallel zu einem Boden (21) des äußeren Gehäuses (1) angeordnet sind und die zweite optische Faser (60") mit dem Ende des zweiten Abzweigelements (7") in Eingriff steht.

## Revendications

1. Boîtier optique (100) pour l'installation d'un réseau d'accès optique, ledit boîtier optique (100) comprenant :
- un boîtier externe (1) comprenant un premier élément de fixation (23a) configuré pour fixer ledit boîtier externe (1) à un câble optique (6) dudit réseau d'accès optique au niveau d'une position à mi-longueur de celui-ci ; et
- deux plaques (5', 5") amovibles par rapport audit boîtier externe (1) et configurées pour être logées complètement à l'intérieur dudit boîtier externe (1) côte à côte sur un même plan parallèle à un fond (21) dudit boîtier externe (1), chacune desdites plaques (5', 5") comprenant un deuxième élément de fixation (51) configuré pour fixer chacune desdites plaques (5', 5") à une extrémité d'un élément de chute (7', 7") respectif dudit réseau d'accès optique.

2. Boîtier optique (100) selon la revendication 1, dans lequel lesdites deux plaques (5', 5") sont configurées pour être alignées suivant une direction longitudinale dudit câble optique (6), quand lesdites deux plaques (5', 5") sont logées complètement côte à côte à l'intérieur dudit boîtier externe (1) et quand ledit boîtier externe (1) est fixé audit câble optique (6) .

3. Boîtier optique (100) selon l'une quelconque des revendications précédentes, dans lequel ledit boîtier externe (1) comprend deux évidements (24) configurés pour permettre le passage de deux éléments de chute (7', 7"), chacun desdits deux évidements (24) étant disposé dans une paroi latérale (22a) dudit boîtier externe (1) au niveau d'une position correspondant à une plaque (5', 5") respective.

4. Boîtier optique (100) selon l'une quelconque des revendications précédentes, dans lequel chacune desdites deux plaques (5', 5") comprend :
- une première surface (5a) comprenant ledit deuxième élément de fixation (51) ;
- une deuxième surface (5b) opposée à ladite première surface (5a) et comprenant une zone pour l'agencement d'une longueur additionnelle d'une ou plusieurs fibres optiques (60', 60" ; 70', 70") extraite dudit câble optique (6) et/ou dudit élément de chute (7', 7") ; et
- un bord périphérique présentant une encoche (5c) qui forme un passage de fibre configuré pour permettre le passage desdites une ou plusieurs fibres optiques (60', 60" ; 70', 70") de ladite première surface (5a) à ladite deuxième surface (5b) de ladite plaque (5', 5").

5. Boîtier optique (100) selon la revendication 4, dans lequel chacune desdites deux plaques (5', 5") est configurée pour être logée complètement à l'intérieur dudit boîtier externe (1) avec ladite première surface (5a) orientée vers le fond (21) dudit boîtier externe (1) .

6. Boîtier optique (100) selon la revendication 4 ou 5, dans lequel ladite première surface (5a) de chacune desdites deux plaques (5', 5") comprend au moins un premier élément d'attache (55) configuré pour attacher ladite plaque (5', 5") audit fond (21) dudit boîtier externe (1), et ledit fond (21) dudit boîtier externe (1) comprend au moins un deuxième élément d'attache (27a, 27b) configuré pour s'engager avec ledit au moins un premier élément d'attache (55).

7. Boîtier optique (100) selon la revendication 6, dans lequel ledit au moins un premier élément d'attache (55) comprend au moins une colonne (55) et l'au moins un deuxième élément d'attache (27a, 27b) comprend au moins un cylindre creux (27) configuré pour recevoir l'au moins une colonne (55).

8. Boîtier optique (100) selon l'une quelconque des revendications 4 à 7, dans lequel chacune desdites deux plaques (5', 5") comprend, sur ladite première surface (5a), au moins une paroi de guidage (52, 54) configurée pour définir deux chemins de fibre alternatifs sur ladite première surface (5a), dudit deuxième élément de fixation (51) configuré pour fixer ladite plaque (5', 5") à ladite extrémité dudit élément de chute (7', 7") audit passage de fibre formé par ladite encoche (5c) dans ledit bord périphérique de ladite plaque (5', 5") .

9. Boîtier optique (100) selon la revendication 8, dans lequel lesdits deux chemins alternatifs sont configurés pour guider une fibre optique (70', 70") sortant de ladite extrémité dudit élément de chute (7', 7") de manière qu'elle atteigne ledit passage de fibre depuis l'une quelconque de deux directions opposées (D1, D2) .

10. Boîtier optique (100) selon l'une quelconque des revendications 4 à 9, dans lequel chacune desdites deux plaques (5', 5") comprend un porte-connecteur (58) sur ladite deuxième surface (5b).

11. Boîtier optique (100) selon l'une quelconque des revendications précédentes, dans lequel ledit boîtier externe (1) est configuré pour être scellé contre des fuites et une infiltration de poussière, durant l'utilisation.

12. Boîtier optique (100) selon la revendication 11, dans lequel ledit boîtier externe (1) comprend une tranchée périphérique (26) adaptée pour être remplie avec un matériau d'étanchéité.

13. Boîtier optique (100) selon la revendication 3, dans lequel chacune desdites deux plaques (5', 5") comprend également un capuchon détachable (51a) associé audit deuxième élément de fixation (51), ledit capuchon détachable (51a) étant configuré pour engager un desdits deux évidements (24) configurés pour laisser le passage dudit élément de chute (7', 7"), quand ledit élément de chute (7', 7") n'est pas présent.

14. Ensemble comprenant un câble optique (6), au moins un élément de chute (7', 7") et un boîtier optique (100) logeant un engagement entre ledit câble optique (6) et ledit au moins un élément de chute (7', 7") au niveau d'une position à mi-longueur dudit câble optique (6), dans lequel ledit boîtier optique (100) est selon l'une quelconque des revendications 1 à 13.

15. Procédé d'installation d'un réseau d'accès optique, ledit procédé comprenant :
a) l'extraction d'une première fibre optique (60') à partir d'un câble optique (6) dudit réseau d'accès optique au niveau d'une position à mi-longueur de celui-ci et la fixation d'un boîtier externe (1) d'un boîtier optique (100) audit câble optique (6) au niveau de ladite position à mi-longueur ;
b) la fixation d'une extrémité d'un premier élément de chute (7') à une première plaque (5') dudit boîtier optique (100) alors que ladite première plaque (5') est détachée dudit boîtier externe (1), le logement complet de ladite première plaque (5') dans ledit boîtier externe (1) dudit boîtier optique (100) et l'engagement de ladite première fibre optique (60') avec ladite extrémité dudit premier élément de chute (7') ;
ledit procédé comprenant en outre, après que ladite première plaque (5') avec ladite extrémité dudit premier élément de chute (7') engagée avec ladite première fibre optique (60') fixée sur celle-ci a été logée complètement dans ledit boîtier externe (1) :
c) l'extraction d'une deuxième fibre optique (60") à partir dudit câble optique (6) au niveau de ladite position à mi-longueur ;
d) la fixation d'une extrémité d'un deuxième élément de chute (7") à une deuxième plaque (5") dudit boîtier optique (100) alors que ladite deuxième plaque (5") est détachée dudit boîtier externe (1), le logement complet de ladite deuxième plaque (5") dans ledit boîtier externe (1) dudit boîtier optique (100) à côté de ladite première plaque (5'), ladite première plaque (5') et ladite deuxième plaque (5") étant disposées côte à côte sur un même plan parallèle à un fond (21) dudit boîtier externe (1), et l'engagement de ladite deuxième fibre optique (60") avec ladite extrémité dudit deuxième élément de chute (7").
